# EUROPEAN PATENT APPLICATION

(11) **EP 3 738 667 A1**
(43) Date of publication of application: **18.11.2020**
(21) Application number: 19174194.1
(22) Date of filing: 13.05.2019
(51) Int. Cl.: B01J 4/00

(54) **NOZZLE IN A REACTOR COMPRISING AN OUTLET INSERT**

(71) Applicant: Doosan Lentjes GmbH, 40880 Ratingen (DE)
(72) Inventor: KRÜLL, Ferdinand, 40470 Düsseldorf (DE); BROSCH, Björn, 45136 Essen (DE); KARPINSKI, Andreas, 44285 Wuppertal (DE)
(74) Representative: Feucker, Max Martin

(57) **Abstract**

The present invention relates to a reactor for cleaning flue gases by a dry or quasi-dry sorption process, comprising
- a flue gas inlet (1) at the bottom of the reactor,
- a flue gas outlet (4) at the top of the reactor,
- at least one dry sorbent nozzle, the at least one nozzle being arranged between the flue gas inlet (1) and the flue gas outlet (4),
- the at least one dry sorbent nozzle having an inlet and an outlet.

## Description

The present invention relates to a reactor for cleaning flue gases by a dry or quasi-dry sorption process, comprising
- a flue gas inlet at the bottom of the reactor,
- a flue gas outlet at the top of the reactor,
- at least one nozzle for injecting a gas comprising medium into the reactor, the at least one nozzle being arranged between the flue gas inlet and the flue gas outlet,
- the at least one nozzle having an inlet and an outlet.

The at least on nozzle is in particular a dry sorbent nozzle of a dry (quasi dry) sorbent injection system for injecting dry sorbent with a carrier gas into the reactor. Alternatively, gases, gas mixtures (oxygen comprising gas) or other process media (water) such as steam may (all together being also referred to as medium) be injected through the nozzle into the reactor.

The combustion gases produced in a combustion chamber are usually introduced as flue gas through the inlet into the reactor, which is arranged in a vertical manner. Accordingly, the flue gas inlet is arranged at the very bottom of the reactor, meaning that there is preferably no mean for collecting residuals below the flue gas inlet. Usually, the flue gas is provided through a duct from a combustion chamber, which duct leads in a horizontal manner to the flue gas inlet of the reactor.

In such a vertical reactor, the flue gas outlet is arranged vertically above the flue gas inlet, so that the reactor can be considered that part, in which the flue gas advances vertically from the bottom to the top. The reactor is delimited by a reactor wall.

A dry sorbent is injected into the flue gas, for example calcium oxide (i.e. CaO) or calcium hydroxide powder (i.e. Ca(OH)₂ powder) is injected into the flue gas. The dry sorbent containing flue gas may be forced through a venturi system in order to enhance the sorption process. Accordingly, the flow cross section of the reactor downstream of the venturi system is much larger than the minimum total flow cross section at the venturi system.

In order to enhance the sorption process, it is also known to inject water into the reactor i.e. downstream of the venturi system. Alternatively, it is known to moisten the dry sorbent before injection into the reactor.

The dry sorbent is usually injected from a wall of the reactor into the reactor, so that the highest dry sorbent concentration is at the outer circumference of the reactor at the injection side.

After the sorbent comprising flue gas leaves the reactor through the outlet it is advanced to a separator/filter, in which solid particles are separated from the stream.

A reactor with the above described features is for example known from CN 101402019 B.

Usually there are multiple nozzles for providing the mixture of dry sorbent and the carrier gas, wherein the nozzles are connected with its inlets to a common supply. Other process medium might be added through the nozzles. The nozzles are also secured to a wall of the reactor. If the nozzles are to be replaced due to wear or in order to provide a different flow behavior to the provided gas stream, the whole nozzle needs to be disconnected from the central supply and from the wall. Accordingly, there is a great effort to replace a respective nozzle.

In view of this, it is an object of the present invention to provide a reactor, in which the effort for maintaining or exchanging a nozzle, in particular for providing (quasi) dry sorbent is reduced.

This object is achieved by a reactor with the features of the independent claim and by a method for maintaining the reactor. Preferred embodiments of the invention are described in the sub claims and in the whole description, wherein single features of the preferred embodiments can be combined with each other in a technically meaningful manner.

The object is achieved in particular in that the gas inlet of the nozzle is embodied by a nozzle pipe, preferably being connected to a common supply line for the gas, gas mixture, dry sorbent comprising carrier gas or the like and being connected to a wall of the reactor, and in that the gas outlet is embodied by an (separate) outlet insert, the outlet insert being at least partly inserted into the nozzle pipe, wherein the outlet insert is connected to the nozzle pipe by a welded joint.

The invention also suggests a method for replacing an outlet insert of a nozzle in a reactor in particular in a reactor according to the invention, comprising the following steps:
- destroying a welded joint between the used outlet insert of the nozzle and a nozzle pipe,
- removing the used outlet insert out of the nozzle pipe,
- inserting a new outlet insert into the nozzle pipe,
- welding the new outlet insert to the nozzle pipe.

With other words, the present invention suggests to provide a nozzle in a reactor which is made of multiple parts, wherein a nozzle pipe, in particular having a constant (inner and/or outer) diameter, connects the nozzle to a common supply for a gas, a gas mixture, the dry sorbent comprising carrier gas or the like and to a wall of the reactor, and wherein the outlet insert, comprising elements for providing the desired flow properties to the medium, is at least partially and interchangeably arranged in the nozzle pipe. Furthermore, a welded connection is provided between the nozzle pipe and the outlet insert, which welded connection is in particular provided at such a location, that the welded connection can be destroyed, at least when the reactor is shout down. This way, the outlet insert can be easily exchanged, wherein the new outlet insert can be connected by welding to the nozzle pipe. Accordingly, it is not only possible to provide an outlet insert that provides the same flow property to the carrier gas/dry sorbent but it may also be possible to provide an outlet insert that provides a different flow property than the used outlet insert.

The outer diameter of the section of the outlet insert inserted into the nozzle pipe is of the same dimension/size as the inner diameter of the nozzle pipe.

While it is principally sufficient that the outlet insert has a constant inner diameter which is smaller than the inner diameter of the nozzle pipe, it is preferred that the outlet insert comprises at least one element which provides a desired flow property to the dry sorbent comprising carrier gas.

For example, the inner diameter of the outlet insert may decrease along its extension from the inlet side to the outlet side and may optionally increase after a minimum diameter is reached.

The outlet insert may also comprise a swirling part, such as a helically extending guiding part in its inner flow cross section, with which a swirl can be provided to the gas, gas mixture carrier gas/dry sorbent or the like.

The outlet insert may also comprise a deflecting part, with which the flow of the gas, gas mixture or dry sorbent comprising carrier gas is at least partially deflected, so that the main direction stream of the medium flow leaving the outlet insert is inclined to the axial direction of the nozzle pipe.

It is also possible that the outlet insert comprises a diverting element, with which the flow of the medium is diverted in two, three or more sub flows, wherein the main directions of the sub flows are inclined to each other.

In order that the welded joint is easily accessible, it may be arranged on the outside of the nozzle pipe.

Preferably, the welded joint is accessible from the inside of the reactor, so that it can be manually destroyed during maintenance of the reactor, when the reactor is shut down.

In one embodiment, it can be provided that the outlet insert has a flange which abuts against an end face of the nozzle pipe, wherein the welded joint is provided between the flange and an outer circumference of the end face of the nozzle pipe. This way the welded joint is easily accessible but it does not affect the flow properties which are provided from the outlet insert to the medium.

In order that the nozzle pipe is fixed to a wall of the reactor it is suggested that the nozzle pipe is arranged partly in an inner wall delimiting the reactor, wherein the nozzle pipe protrudes into the reactor and wherein the welded joint is arranged on a section of the nozzle pipe that extends into the reactor.

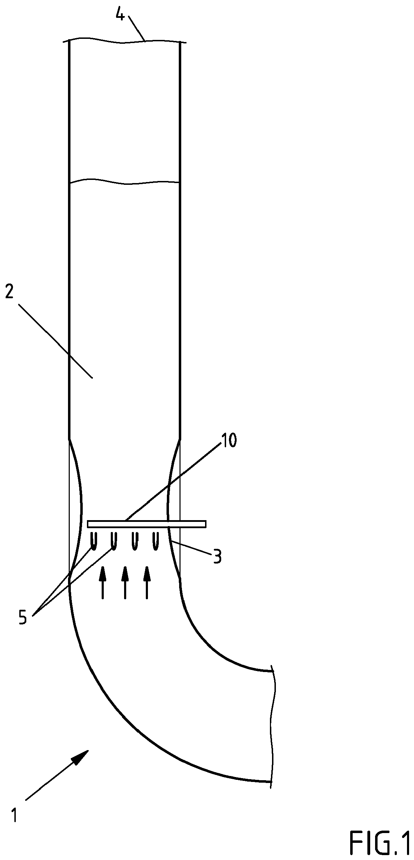

The invention and the technical background will now be explained with regard to the figures, which show an exemplary embodiment of the invention. The figures show schematically
Figure 1: a side view of a part of a reactor and
Figure 2: a nozzle of the reactor having a nozzle pipe and an outlet insert.

The reactor comprises a chamber 2 with a flue gas inlet 1 at its bottom, through which flue gas can be introduced in the chamber 2. The chamber 2 is delimited by a wall 3. A dry sorbent injection system 10 with at least one dry sorbent nozzle for injecting dry sorbent with a carrier gas into the chamber 2 is embodied above the flue gas inlet 1. Water injection nozzles 5 are arranged below the dry sorbent injection system 10 with which water can be injected into the flue gas in order to moisten the above injected dry sorbent.

The reaction gases produced in the chamber 2 leave the reactor through an outlet 4 at the top of the chamber 2, eventually comprising sorbent particulate material. Downstream of the outlet 4 a separator may be arranged for separating the reaction gases from the particulate material.

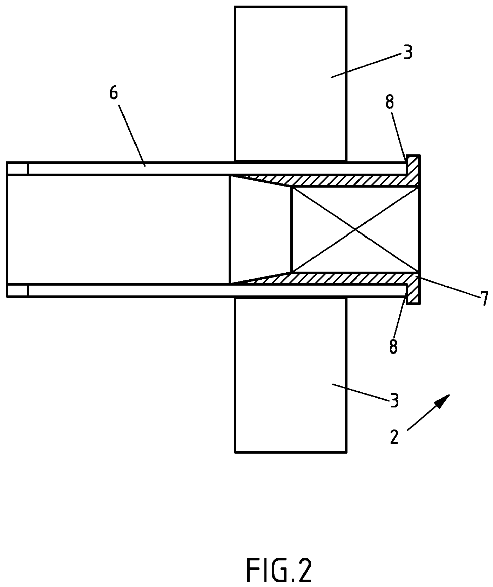

In figure 2 a nozzle of the dry sorbent injection system 10 for providing the dry sorbent comprising carrier gas into the chamber 2 is depicted.

The nozzle comprises a nozzle pipe 6 and an outlet insert 7. The nozzle pipe 6 is connected on the left side to a common supply of carrier gas and dry sorbent (not shown). The nozzle pipe 6 extends through the wall 3 into the chamber 2.

The outlet insert 7 is inserted into the nozzle pipe 6, wherein the outlet insert 7 comprises a flange 9, which abuts against an end face of the nozzle pipe 6. The outlet insert 7 is connected to the nozzle pipe 6 by a welded joint 8, which is arranged at an outer circumference of the nozzle pipe 6 and behind the flange 9.

The outlet insert 7 can be easily exchanged by destroying the welded joint 8, so that afterwards the outlet insert 7 can be removed from the nozzle pipe 6. After inserting a new outlet insert 7, the new outlet insert 7 can be connected to the nozzle pipe 6 by welding.

While the depicted embodiment of the outlet insert 7 only has a slightly smaller inner diameter than the inner diameter of the nozzle pipe 6, the outlet insert 7 may also have different elements (such as diverters, swirlers or similar) in order to affect the flow properties of the provided sorbent comprising carrier gas.

**Reference sings**
1 flue gas inlet
2 chamber
3 wall
4 flue gas outlet
5 water injection nozzles
6 nozzle pipe
7 outlet insert
8 welded joint
9 flange
10 dry sorbent injection system

## Claims

1. Reactor for cleaning flue gases by a dry or quasi-dry sorption process, comprising
- a flue gas inlet (1) at the bottom of the reactor,
- a flue gas outlet (4) at the top of the reactor,
- at least one nozzle for injecting a gas comprising medium into the reactor, the at least one nozzle being arranged between the flue gas inlet (1) and the flue gas outlet (4),
- the at least one nozzle having an inlet and an outlet, **characterized in that**
the inlet is embodied by a nozzle pipe (6) and the outlet is embodied by an outlet insert (7), the outlet insert (7) being at least partly inserted in the nozzle pipe (6), wherein the outlet insert (7) is connected to the nozzle pipe by a welded joint (8).

2. Reactor according to claim 1, the welded joint (8) being arranged on the outside of the nozzle pipe (6).

3. Reactor according to claim 1 or 2 wherein the welded joint (8) is accessible from the inside of the reactor.

4. Reactor according to one of the preceding claims 1 to 3, wherein the outlet insert (7) has a flange (9) which abuts against an end face of the nozzle pipe (6), wherein the welded joint (8) is provided between the flange (9) and an outer circumference of the end face of the nozzle pipe (6).

5. Reactor according to one of the preceding claims 1 to 4, wherein the nozzle pipe (6) is arranged in a wall (3) delimiting the reactor, wherein the nozzle pipe (6) protrudes into the reactor and the welded joint (8) is arranged on a section of the nozzle pipe (6) that extends into the reactor.

6. Reactor according to one of the preceding claims 1 to 5, wherein the welded joint (8) being embodied by at least one of the following:
- a continuous welding seam,
- multiple welding beads,
- multiple welding points.

7. Reactor according to one of the preceding claims 1 to 6, wherein the outlet insert (7) comprises at least one of the following:
- a multiple outlet part,
- a deflecting part,
- a swirling part.

8. Method for replacing an outlet insert of a nozzle in a reactor for cleaning flue gases by a dry or quasi-dry sorption process, comprising the following steps:
- Destroying a welded joint (8) between the used outlet insert (7) of the nozzle and a nozzle pipe (6),
- Removing the used outlet insert (7) out of the nozzle pipe (6),
- Inserting a new outlet insert (7) into the nozzle pipe (6),
- Welding the new outlet insert (7) to the nozzle pipe (6).

## Amended claims

### Amended claims in accordance with Rule 137(2) EPC.

1. Reactor for cleaning flue gases by a dry or quasi-dry sorption process, comprising
- a flue gas inlet (1) at the bottom of the reactor,
- a flue gas outlet (4) at the top of the reactor,
- at least one nozzle for injecting a medium, which medium comprises a gas, into the reactor, the at least one nozzle being arranged between the flue gas inlet (1) and the flue gas outlet (4),
- the at least one nozzle having an inlet and an outlet,
**characterized in that**
the inlet is embodied by a nozzle pipe (6) and the outlet is embodied by an outlet insert (7), the outlet insert (7) being at least partly inserted in the nozzle pipe (6), wherein the outlet insert (7) is connected to the nozzle pipe by a welded joint (8), wherein the welded joint (8) is accessible from the inside of the reactor.

2. Reactor according to claim 1, the welded joint (8) being arranged on the outside of the nozzle pipe (6).

3. Reactor according to one of the preceding claims 1 or 2, wherein the outlet insert (7) has a flange (9) which abuts against an end face of the nozzle pipe (6), wherein the welded joint (8) is provided between the flange (9) and an outer circumference of the end face of the nozzle pipe (6).

4. Reactor according to one of the preceding claims 1 to 3, wherein the nozzle pipe (6) is arranged in a wall (3) delimiting the reactor, wherein the nozzle pipe (6) protrudes into the reactor and the welded joint (8) is arranged on a section of the nozzle pipe (6) that extends into the reactor.

5. Reactor according to one of the preceding claims 1 to 4, wherein the welded joint (8) being embodied by at least one of the following:
- a continuous welding seam,
- multiple welding beads,
- multiple welding points.

6. Reactor according to one of the preceding claims 1 to 5, wherein the outlet insert (7) comprises at least one of the following:
- a multiple outlet part,
- a deflecting part,
- a swirling part.

7. Method for replacing an outlet insert of a nozzle in a reactor for cleaning flue gases by a dry or quasi-dry sorption process, comprising the following steps:
- Destroying a welded joint (8) between the used outlet insert (7) of the nozzle and a nozzle pipe (6) from the inside of the reactor,
- Removing the used outlet insert (7) out of the nozzle pipe (6),
- Inserting a new outlet insert (7) into the nozzle pipe (6),
- Welding the new outlet insert (7) to the nozzle pipe (6).
